# EUROPÄISCHE PATENTSCHRIFT

(11) **EP 2 428 665 B1**
(45) Veröffentlichungstag und Bekanntmachung des Hinweises auf die Patenterteilung: **21.08.2013**
(21) Anmeldenummer: 11007061.2
(22) Anmeldetag: 31.08.2011
(51) Int. Cl.: F02D 9/10, F16K 1/22

(54) **Schaltwelle sowie Verfahren zur Herstellung einer Schaltwelle**
Selector shaft and method for manufacturing same
Arbre de commande et procédé de fabrication d'un arbre de commande

(30) Priorität: 13.09.2010 DE 102010045215
(43) Veröffentlichungstag der Anmeldung: 14.03.2012
(73) Patentinhaber: AUDI AG, 85045 Ingolstadt (DE)
(72) Erfinder: Daschner, René, 85055 Ingolstadt (DE)
(74) Vertreter: Lehle, Josef

(56) Entgegenhaltungen:
- DE-A1- 10 114 994
- DE-A1- 19 918 777
- DE-B3-102006 052 094
- US-B1- 6 167 867

## Beschreibung

Die Erfindung betrifft eine Schaltwelle, insbesondere einer Saugrohranordnung, mit einem zur Betätigung der Schaltwelle vorgesehenen, einen Kugelkopf aufweisenden Betätigungselement. Die Erfindung betrifft weiterhin ein Verfahren zur Herstellung einer Schaltwelle.

Schaltwellen der eingangs genannten Art sind aus dem Stand der Technik bekannt. Sie sind insbesondere für Saugrohranordnungen vorgesehen, bei welchen zumindest eine Saugrohröffnung mit zumindest einem an der Schaltwelle angeordneten oder von der Schaltwelle betätigbaren Abdeckelement verschließbar beziehungsweise freigebbar ist. Die Schaltwelle ist dabei üblicherweise um eine Drehachse drehbar gelagert. Zu diesem Zweck kann ihr zumindest ein Lager zugeordnet sein. Die Schaltwelle ist dabei innerhalb eines bestimmten Winkelbereichs in eine beliebige Drehwinkelstellung bringbar. Zu diesem Zweck ist das Betätigungselement vorgesehen, welches der Betätigung der Schaltwelle dient. Üblicherweise wirkt ein Antrieb mit dem Betätigungselement zusammen, um die Schaltwelle zu betätigen und damit in die gewünschte Drehwinkelstellung zu bringen. Das Betätigungselement ist demnach dazu vorgesehen, das Drehmoment des Antriebs auf die Schaltwelle aufzuprägen. Beispielsweise kann das Betätigungselement über ein Koppelgestänge mit dem Antrieb wirkverbunden sein. Das Betätigungselement dient dabei als Mitnahmeelement.

Aus der DE 10240316A1 sind ein Klappenelement und eine Klappenanordnung bekannt. Das Klappenelement ist für eine Verbrennungskraftmaschine vorgesehen und weist mindestens eine Klappe auf, die auf einer Welle angeordnet ist, wobei die Welle zumindest eine Lagerstelle aufweist. Das Klappenelement verfügt über ein als Kugelkopf ausgebildetes Betätigungselement. Der Kugelkopf soll zur Aufnahme eines Koppelgestänges dienen, welches durch einen Antrieb bewegbar ist. Der Kugelkopf ist einstückig mit einem Endabschnitt der Welle des Klappenelements ausgebildet. Daraus resultierte jedoch ein vergleichsweise hoher Herstellungsaufwand, weil der Kugelkopf beispielsweise bereits bei der Herstellung des Endabschnitts gemeinsam mit diesem ausgebildet wird. Der Kugelkopf wird also zusammen mit der Welle hergestellt. Zusätzlich muss an der Welle des Klappenelements eine Drallklappe ausgebildet werden. Bei der Herstellung des Klappenelements sind demnach zahlreiche Herstellungsschritte durchzuführen.

Demgegenüber weist die Schaltwelle mit den in Anspruch 1 genannten Merkmalen den Vorteil auf, dass sie kostengünstig herstellbar ist, wobei bei der Herstellung der Schaltwelle insbesondere gleichzeitig ein Abdeckelement der Schaltwelle ausgebildet und das Betätigungselement an der Schaltwelle befestigt wird. Dies wird erfindungsgemäß erreicht, indem die Schaltwelle aus einem aus einem ersten Werkstoff bestehenden Grundkörper und einem zumindest bereichsweise auf den Grundkörper aufgebrachten Schaltwellenkörper aus einem zweiten Werkstoff besteht. Zudem soll das Betätigungselement zumindest bereichsweise von dem Schaltwellenkörper eingefasst sein. Die Schaltwelle besteht demnach grundsätzlich aus dem Grundkörper, dem Schaltwellenkörper und dem Betätigungselement, wobei selbstverständlich auch mehrere Grundkörper, Schaltwellenkörper und Betätigungselemente vorliegen können. Der Grundkörper besteht aus dem ersten Werkstoff, welcher beispielsweise ein Metall, insbesondere Stahl, ist. Der Grundkörper kann prinzipiell eine beliebige zweckdienliche Form aufweisen, beispielsweise als im Wesentlichen gerader Stab vorliegen oder kurbelwellenartig ausgebildet sein, wobei in letzterem Fall zumindest ein Bereich des Grundkörpers außerhalb einer Drehachse der Schaltwelle beziehungsweise in radialer Richtung beabstandet von dieser vorliegt.

Auf den Grundkörper wird der Schaltwellenkörper aufgebracht. Dieser besteht aus einem zweiten Werkstoff, welcher vorzugsweise von dem ersten Werkstoff unterschiedlich ist. Der zweite Werkstoff ist beispielsweise ein Kunststoff. Das Aufbringen des Schaltwellenkörpers auf den Grundkörper ist derart vorgesehen, dass das Betätigungselement zumindest bereichsweise in dem Schaltwellenkörper vorliegt, so dass das Betätigungselement von dem Schaltwellenkörper gehalten und in Bezug zu dem Grundkörper, insbesondere drehsteif, fixiert ist. Um eine besonders drehsteife Verbindung zwischen Betätigungselement und Grundkörper zu erreichen, kann das Betätigungselement in dem von dem Schaltwellenkörper eingefassten Bereich eine Riffelung aufweisen, welche sich im Wesentlichen in axialer Richtung erstreckt. Der Schaltwellenkörper muss nicht den gesamten Grundkörper überdecken, sondern kann lediglich bereichsweise auf diesem vorliegen. Selbstverständlich kann auf den Grundkörper und/oder den Schaltwellenkörper eine weitere Schicht, beispielsweise aus einem Elastomer, aufgebracht werden, welche insofern als Dichtungschicht dienen kann, um eine zuverlässige Abdeckung der zumindest einen Saugrohröffnung durch das Abdeckelement der Schaltwelle zu gewährleisten.

-Dabei umgreift zumindest ein Bereich des Betätigungselements den Grundkörper der Schaltwelle wenigstens bereichsweise umfänglich, wozu das Betätigungselement eine Ausnehmung zur zumindest bereichsweisen Aufnahme des Grundkörpers aufweist. Um eine stabile Befestigung des Betätigungselements an der Schaltwelle zu gewährleisten, ist es vorgesehen, dass das Betätigungselement den Grundkörper zumindest bereichsweise umgreift, während es seinerseits von dem Schaltwellenkörper eingefasst ist. Durch das Umgreifen des Betätigungselements von dem Grundkörper wird das Betätigungselement zumindest in radialer Richtung bezüglich des Grundkörpers festgesetzt. Das Einfassen durch den Schaltwellenkörper dient demnach insbesondere dem Festsetzen des Betätigungselements bezüglich des Grundkörpers in axialer Richtung. Das Einfassen durch den Schaltwellenkörper verhindert insofern ein Herunterrutschen des Betätigungselements von dem Grundkörper. Vorzugsweise umgreift das Betätigungselement den Grundkörper in Umfangsrichtung vollständig.

Besonders bevorzugt liegt dabei eine Klemmverbindung zwischen dem Betätigungselement und dem Grundkörper der Schaltwelle vor, so dass eine besonders zuverlässige Verbindung zwischen dem Betätigungselement und dem Grundkörper vorliegt. Die Ausnehmung, mittels welcher das wenigstens bereichsweise umfängliche Umgreifen des Betätigungselements durch den Grundkörper realisiert wird, ist beispielsweise zentral in dem Betätigungselement ausgebildet. Die Ausnehmung kann dabei sacklochartig vorliegen, also das Betätigungselement in axialer Richtung nicht vollständig durchgreifen. Alternativ kann sie auch als Durchgangsöffnung ausgebildet sein, wobei die Ausnehmung das Betätigungselement in axialer Richtung vollständig durchgreift.

Schließlich soll die Ausnehmung den Kugelkopf zumindest bereichsweise durchgreifen. Der Kugelkopf ist dabei auf einer von dem Grundkörper abgewandten Seite des Betätigungselements vorgesehen. Der Kugelkopf dient insbesondere dazu, die Wirkverbindung zu einem Antrieb herzustellen. Dabei wird er beispielsweise zumindest bereichsweise von einem Koppelgestänge, welches mit dem Antrieb wirkverbunden ist, umgriffen. Die Ausnehmung ist vorteilhafterweise derart an dem Betätigungselement vorgesehen, dass sie zumindest einen Bereich des Kugelkopfs durchgreift. Besonders bevorzugt ist es, wenn die Ausnehmung den Kugelkopf vollständig durchgreift. Auf diese Weise kann auf der dem Grundkörper abgewandten Seite des Kugelkopf eine Eingriffsöffnung vorliegen, welche beispielsweise zur Zentrierung vorgesehen ist. Nach einem Einbau der Schaltwelle und einem Verbinden mit dem Antrieb, insbesondere mittels des Koppelgestänges, kann es auch vorgesehen sein, die Ausnehmung beziehungsweise die Eingriffsöffnung zu verschließen. Zu diesem Zweck kann beispielsweise ein Stopfen verwendet werden, welcher klemmend in die Eingriffsöffnung eingreift.

Eine Weiterbildung der Erfindung sieht vor, das erste Material ein Metall, insbesondere Stahl, und/oder das zweite Material ein Kunststoff, insbesondere ein Polymer, ist. Auf diese Weise kann die Schaltwelle besonders einfach hergestellt werden und eine zuverlässige Befestigung des Betätigungselements bezüglich des Grundkörpers erreicht werden. Das erste Material ist vorzugsweise biegesteif und torsionssteif. Das zweite Material ist vorzugsweise ein gießbares Material, welches zudem auf dem ersten Material haftet.

Eine Weiterbildung der Erfindung sieht vor, dass in dem Kugelkopf ein, insbesondere von der Ausnehmung gebildetes, Sackloch vorgesehen ist, wobei der Grund des Sacklochs insbesondere von dem Grundkörper definiert ist. Unter Sackloch ist dabei eine Ausnehmung zu verstehen, welche den Kugelkopf beziehungsweise das Betätigungselement nicht vollständig durchgreift, sondern einen Grund aufweist. Das Sackloch dient beispielsweise der Zentrierung. Das Sackloch ist mit Vorteil von der Ausnehmung gebildet. Dabei kann es vorgesehen sein, dass der Grund des Sacklochs von dem Grundkörper definiert ist. Das bedeutet, dass die Ausnehmung zunächst den Kugelkopf beziehungsweise das Betätigungselement in axialer Richtung vollständig durchgreift. Anschließend wird das Betätigungselement derart angeordnet, dass es den Grundkörper wenigstens bereichsweise umfänglich umgreift. Der Grundkörper liegt demnach wenigstens teilweise in der Ausnehmung des Betätigungselements vor. Dabei bildet er den Grund des Sacklochs aus.

Eine Weiterbildung der Erfindung sieht vor, dass das Betätigungselement zumindest ein in den Schaltwellenkörper eingreifendes Hintergriffselement, insbesondere in Form eines Radialkragens, aufweist. Um eine besonders zuverlässige Fixierung des Betätigungselements in axialer Richtung bezüglich des Grundkörpers der Schaltwelle zu erreichen, ist das mindestens eine Hintergriffselement vorgesehen. Dieses ragt derart in den Schaltwellenkörper hinein, dass eine formschlüssige Verbindung zwischen Betätigungselement und Schaltwellenkörper vorliegt. Das Hintergriffselement kann dabei beispielsweise in Form eines Radialkragens vorliegen, welcher sich in radialer Richtung nach außen erstreckt.

Eine Weiterbildung der Erfindung sieht vor, dass das Betätigungselement mindestens ein Dichtelement, insbesondere als Radialvorsprung ausgebildet und/oder in radialer Richtung mit dem Schaltwellenkörper fluchtend, aufweist. Das Dichtelement ist dazu vorgesehen, bei der Herstellung der Schaltwelle den Schaltwellenkörper in zumindest einer Richtung zu definieren. Insbesondere wenn der zweite Werkstoff, aus welchem der Schaltwellenkörper besteht, in einem Spritzgießverfahrens hergestellt wird, ist eine solche Ausgestaltung des Betätigungselements sinnvoll, weil in diesem Fall im Bereich des Betätigungselements keine zusätzlichen Dichtmaßnahmen vorgesehen werden müssen. Das Dichtelement liegt beispielsweise als Radialvorsprung vor.

Besonders bevorzugt ist ein Fluchten des Dichtelements in radialer Richtung mit dem Schaltwellenkörper vorgesehen. Das bedeutet, dass sich das Dichtelement des Betätigungselements ausgehend von dem Grundkörper beziehungsweise dessen Mittelpunkt in radialer Richtung etwa gleich weit erstreckt wie der Schaltwellenkörper. Insofern fluchtet die Oberfläche des Dichtelements mit der Oberfläche des Schaltwellenkörpers zumindest in dem Bereich, in welchem der Schaltwellenkörper auf das Dichtelement stößt.

Eine Weiterbildung der Erfindung sieht vor, dass von dem Grundkörper und/oder dem Schaltwellenkörper zumindest ein Abdeckelement ausgebildet ist. Das Abdeckelement dient, wie bereits vorstehend ausgeführt, dem Abdecken beziehungsweise Freigeben einer Saugrohröffnung der Saugrohranordnung. Das Abdeckelement kann in Form einer Klappe vorliegen. Das Abdeckelement kann entweder von dem Grundkörper, dem Schaltwellenkörper oder beiden gemeinsam ausgebildet sein. Besonders bevorzugt ist jedoch eine Ausbildung des Abdeckelements durch den Schaltwellenkörper, wobei das zweite Material vorzugsweise derart gewählt ist, dass eine gute Dichtwirkung des Abdeckelements gewährleistet ist. Zur Erzielung einer guten Dichtwirkung kann jedoch auch ein drittes Material zumindest bereichsweise auf den Grundkörper und/oder den Schaltwellenkörper beziehungsweise auf das Abdeckelement aufgebracht werden. Das dritte Material ist dabei mit Vorteil ein Elastomer oder ein Polymer.

Die Erfindung betrifft weiterhin ein Verfahren zur Herstellung einer Schaltwelle, insbesondere gemäß den vorstehenden Ausführungen, mit einem zur Betätigung der Schaltwelle vorgesehenen, einen Kugelkopf aufweisenden Betätigungselement. Dabei ist vorgesehen, dass die Schaltwelle aus einem aus einem ersten Werkstoff bestehenden Grundkörper und einem zumindest bereichsweise auf den Grundkörper aufgebrachten Schaltwellenkörper aus einem zweiten Werkstoff hergestellt wird, und dass das Betätigungselement zumindest bereichsweise von dem Schaltwellenkörper eingefasst wird. Hinsichtlich der weiteren Ausgestaltung der Schaltwelle wird auf den Anspruch 7 verwiesen. Bei der Herstellung der Schaltwelle werden demnach folgende Schritte durchgeführt: Bereitstellen des Grundkörpers sowie des Betätigungselements, anordnen des Betätigungselements in Bezug auf den Grundkörper und anschließendes Aufbringen des zweiten Werkstoffs auf den Grundkörper und das Betätigungselement zur Ausbildung des Schaltwellenkörpers. Das Aufbringen des zweiten Werkstoffs erfolgt vorzugsweise mittels eines Spritzgießverfahrens. Bei der Herstellung der Schaltwelle soll das Betätigungselement also zumindest bereichsweise eingefasst sein, so dass es mit dem zweiten Material umspritzt ist.

Eine Weiterbildung der Erfindung sieht vor, dass das Aufbringen des Schaltwellenkörpers auf den Grundkörper und das Einfassen des Betätigungselements im Wesentlichen gleichzeitig, insbesondere während eines Spritzgießvorgangs, erfolgt. Es sind demnach keine aufeinanderfolgenden Arbeitsschritte vorgesehen, um den Schaltwellenkörper auszubilden und das Betätigungselement zu befestigen. Vielmehr soll dies während eines einzigen Arbeitsschritts bewerkstelligt werden, welcher vorzugsweise mittels eines Spritzgießverfahrens durchgeführt wird. Der Schaltwellenkörper wird demnach derart auf den Grundkörper aufgespritzt, dass das Betätigungselement bezüglich des Grundkörpers fixiert ist.

Die Erfindung wird nachfolgend anhand der Zeichnungen näher erläutert, ohne dass eine Beschränkung der Erfindung erfolgt. Dabei zeigen:
- Figur 1: einen Grundkörper einer Schaltwelle,
- Figur 2: den Grundkörper, ein Betätigungselement und einen zumindest bereichsweise auf den Grundkörper und das Betätigungselement aufgebrachten Schaltwellenkörper, und
- Figur 3: eine Detailschnittansicht der Schaltwelle im Bereich des Betätigungselements.

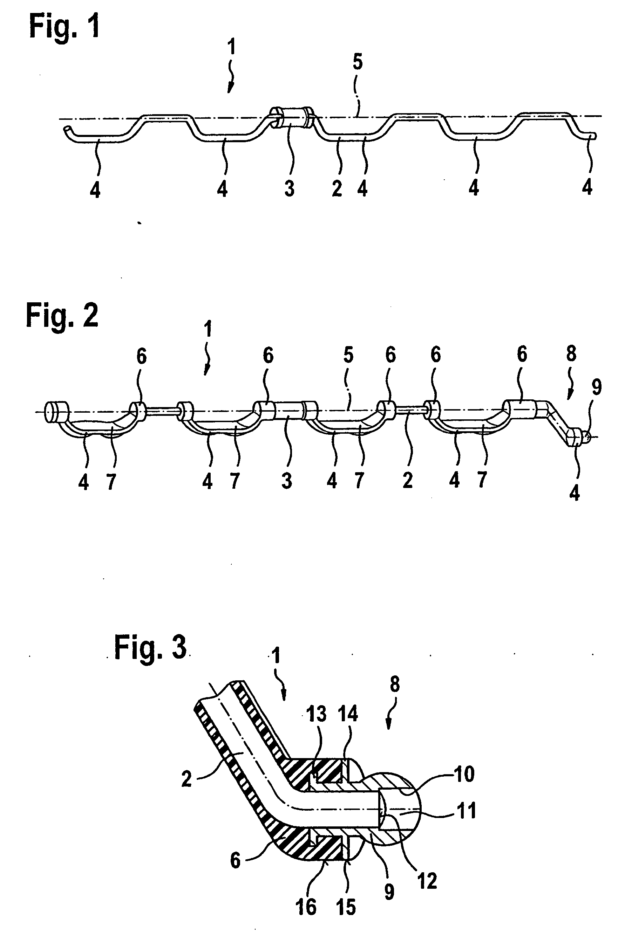

Die Figur 1 zeigt eine Schaltwelle 1, wobei lediglich ein Grundkörper 2 der Schaltwelle 1 und eine Lagerhülse 3 dargestellt sind. Der Grundkörper 2 besteht beispielsweise aus Metall, insbesondere Stahl. In der in der Figur 1 dargestellten Ausführungsform weist er einen kurbelwellenartigen Verlauf auf, so dass er mindestens einen, in dem dargestellten Ausführungsbeispiel mehrere Bereiche 4 aufweist, welche in radialer Richtung von einer Drehachse 5 beabstandet sind. Bei einem Herstellungsverfahren zur Herstellung der Schaltwelle 1 stellen das Bereitstellen des gezeigten Grundkörpers 2 und das Aufbringen der zumindest einen Lagerhülse 3 auf diesen die ersten Arbeitsschritte dar.

Die Figur 2 zeigt die Schaltwelle 1 nach weiteren Schritten des Herstellungsverfahrens. Es wird nun deutlich, dass auf den Grundkörper 2 zumindest bereichsweise ein Schaltwellenkörper 6 aufgebracht ist. Dabei ist es üblicherweise nicht vorgesehen, dass der Schaltwellenkörper 6 den Grundkörper 2 vollständig einschließt. Vielmehr ist es, insbesondere im Bereich der Drehachse 5, vorgesehen, dass Bereiche des Grundkörpers 2 ungedeckt bleiben. In den Bereichen 4 des Grundkörpers 2, welche von der Drehachse 5 beabstandet sind, bildet der Schaltwellenkörper 6 Abdeckelemente 7 aus. Diese wirken beispielsweise mit Saugrohröffnungen einer Saugrohranordnung, welcher die Schaltwelle 1 zugeordnet ist, zusammen. Die Abdeckelemente 7 dienen dabei dazu, die Saugrohröffnungen jeweils entweder freizugeben oder abzudecken beziehungsweise zu verschließen.

Zu diesem Zweck ist die Schaltwelle 1 in einem bestimmten Winkelstellungsbereich in zumindest zwei Drehwinkelstellungen bringbar, wobei die Saugrohröffnungen in der ersten Drehwinkelstellung von den Abdeckelementen 7 verschlossen und in der zweiten Drehwinkelstellung freigegeben sind. Zweckmäßigerweise ist es jedoch vorgesehen, dass die Schaltwelle 1 innerhalb des Winkelbereichs in jede beliebige Drehwinkelstellung bringbar ist, um das Abdecken der Saugrohröffnungen durch die Abdeckelemente 7, insbesondere steuernd und/oder regelnd, einstellen zu können.

Der Schaltwellenkörper 6 wird derart auf den Grundkörper 2 aufgebracht, dass eine drehfeste Verbindung zu diesem vorliegt. Der Schaltwellenkörper 6 kann dabei auch zur Befestigung der Lagerhülse 3 an dem Grundkörper 2 dienen, wobei er die Lagerhülse 3 zumindest bereichsweise, insbesondere auf beiden Seiten der Lagerhülse 3, einfasst.

Zur Betätigung der Schaltwelle 1 ist ein Betätigungselement 8 vorgesehen, welches in dem hier vorliegenden Ausführungsbeispiel an einem Ende des Grundkörpers 2 und in einem der Bereiche 4, also in radialer Richtung beabstandet von der Drehachse 5 angeordnet ist. Das Betätigungselement 8 weist einen Kugelkopf 9 auf, welcher beispielsweise derart ausgeführt ist, dass er über ein Koppelgestänge mit einem Antrieb der Schaltwelle 1 wirkverbindbar ist. Über das Betätigungselement 8 kann mittels des Antriebs demnach ein Drehmoment auf die Schaltwelle 1 aufgebracht werden, welches für eine Drehung der Schaltwelle 1 in die gewünschte Drehwinkelstellung sorgt. Die Schaltwelle 1 dreht sich dabei um ihre Drehachse 5. Eine Lagerung der Schaltwelle 1 ist im Bereich der Lagerhülse 3 vorgesehen, welche beispielsweise aus einem Kunststoff besteht. Zur Lagerung wird die Lagerhülse 3 in eine hier nicht dargestellte Lageraufnahme eingesetzt, so dass ein Radiallager für die Schaltwelle 1 ausgebildet ist.

Die Figur 3 zeigt eine Detailschnittansicht der Schaltwelle 1 im Bereich des Betätigungselements 8. Dabei ist deutlich zu erkennen, dass ein Bereich des Grundkörpers 2 in eine Ausnehmung 10 des Betätigungselements 8 hineinragt. Demnach umfängt das Betätigungselement 8 den Grundkörper 2 zumindest bereichsweise umfänglich. Die Ausnehmung 10 ist dabei derart ausgebildet, dass sie das gesamte Betätigungselement 8 und demnach auch den Kugelkopf 9 in axialer Richtung vollständig durchgreift. Der Grundkörper 2 durchgreift das Betätigungselement 8 beziehungsweise die Ausnehmung 10 jedoch nicht vollständig, so dass in dem Kugelkopf 9 ein von der Ausnehmung 10 gebildetes Sackloch 11 vorliegt. Ein Grund 12 des Sacklochs 11 wird dabei von dem Grundkörper 2 der Schaltwelle 1 definiert. Das Sackloch 11 ist insbesondere zur Zentrierung vorgesehen. Es kann auch vorgesehen sein, dass Sackloch 11 nach Montage der Schaltwelle 1 zu verschließen, beispielsweise mittels eines Stopfens. Die Ausnehmung 10 ist mit Vorteil derart dimensioniert, dass der Grundkörper 2 klemmend in ihr gehalten ist. Das bedeutet, dass die Innenabmessungen der Ausnehmung 10 zumindest geringfügig kleiner sind als die Außenabmessungen des Grundkörpers 2.

Die Figur 3 zeigt zudem, dass das Betätigungselement 8 zumindest bereichsweise von dem Schaltwellenkörper 6 eingefasst ist. Der Schaltwellenkörper 6 ist beispielsweise auf den Grundkörper 2 aufgespritzt. Dabei besteht der Grundkörper 2 aus einem ersten Material, welches beispielsweise ein Metall sein kann, und der Schaltwellenkörper 6 aus einem zweiten Material, welches insbesondere ein Kunststoff ist. Üblicherweise ist das zweite Material dabei von dem ersten Material verschieden.

Um einen zuverlässigen Sitz des Betätigungselements 8 an der Schaltwelle 1 zu erreichen, weist es ein in den Schaltwellenkörper eingreifendes Hintergriffselement 13 auf, welches in Form eines Radialkragens vorliegen kann. Auf diese Weise ist ein Entfernen des Betätigungselements 8 von dem Grundkörper 2 mittels des Schaltwellenkörpers 6 verhindert. Das Hintergriffselement 13 bildet dazu eine Hintergriffsverbindung mit dem Schaltwellenkörper 6 aus. Das Hintergriffselement 13 dient insofern dem Festsetzen des Betätigungselements 8 bezüglich des Grundkörpers 2 in axialer Richtung.

Zusätzlich kann das Betätigungselement 8 in seinem von dem Schaltwellenkörper 6 eingefassten Bereich eine Riffelung aufweisen, welche sich im Wesentlichen in Richtung der Drehachse 5 erstreckt beziehungsweise zumindest angewinkelt zu einer Umfangsrichtung vorliegt. Somit wird das Betätigungselement 8 auch in Umfangsrichtung bezüglich des Grundkörpers 2 zuverlässig festgesetzt. Ein Festsetzen in radialer Richtung erfolgt zudem durch das Eingreifen des Grundkörpers 2 in die Ausnehmung 10 des Betätigungselements 8. Das Betätigungselement 8 ist somit in allen Raumrichtungen gegen eine Verlagerung bezüglich des Grundkörpers 2 sicher gehalten.

Um die Herstellung der Schaltwelle 1 zu vereinfachen, weist das Betätigungselement 8 mindestens ein Dichtelement 14 auf. Dieses begrenzt die Erstreckung des Schaltwellenkörpers 6 in axialer Richtung in Richtung des Kugelkopfs 9. Das Dichtelement 14 ist dabei als Radialvorsprung ausgebildet. Bevorzugt fluchtet das Dichtelement 14 beziehungsweise ein Außenumfang 15 des Dichtelements 14 mit einer Oberfläche 16 des Schaltwellenkörpers 6. Alternativ kann es selbstverständlich auch vorgesehen sein, dass der Außenumfang 15 des Dichtelements 14 von dem Schaltwellenkörper 6 eingefasst ist.

Bei der Herstellung der Schaltwelle 1 ist es vorgesehen, das Aufbringen des Schaltwellenkörpers 6 auf den Grundkörper 2 und das Festsetzen des Betätigungselements 8 bezüglich des Grundkörpers 2 im Wesentlichen gleichzeitig vorzunehmen, also während eines einzigen Arbeitsschritts. Zu diesem Zweck ist es vorgesehen, den Schaltwellenkörper 6 mittels eines Spritzgießverfahrens auf den Grundkörper 2 aufzubringen, wobei vorher bereits das Betätigungselement 8 auf den Grundkörper 2 aufgeschoben wurde. Auf diese Weise lässt sich ein zusätzlicher Arbeitsschritt, welcher ansonsten zur Befestigung des Betätigungselements 8 an dem Grundkörper 2 beziehungsweise dem Schaltwellenkörper 6 notwendig wäre, vermeiden. Dies ermöglicht eine äußerst kostengünstige Herstellung der Schaltwelle 1.

## Patentansprüche

1. Schaltwelle (1), insbesondere einer Saugrohranordnung, mit einem zur Betätigung der Schaltwelle (1) vorgesehenen, einen Kugelkopf (9) aufweisenden Betätigungselement (8), **dadurch gekennzeichnet, dass** die Schaltwelle (1) aus einem aus einem ersten Werkstoff bestehenden Grundkörper (2) und einem zumindest bereichsweise auf den Grundkörper (2) aufgebrachten Schaltwellenkörper (6) aus einem zweiten Werkstoff besteht, und dass das Betätigungselement (8) zumindest bereichsweise von dem Schaltwellenkörper (6) eingefasst ist, wobei zumindest ein Bereich des Betätigungselements (8) den Grundkörper (2) der Schaltwelle (1) wenigstens bereichsweise umfänglich umgreift, wozu das Betätigungselement (8) eine den Kugelkopf (9) zumindest bereichsweise durchgreifende Ausnehmung (10) zur zumindest bereichsweisen Aufnahme des Grundkörpers (2) aufweist.

2. Schaltwelle nach Anspruch 1, **dadurch gekennzeichnet, dass** das erste Material ein Metall, insbesondere Stahl, und/oder das zweite Material ein Kunststoff, insbesondere ein Polymer, ist.

3. Schaltwelle nach einem der vorhergehenden Ansprüche, **dadurch gekennzeichnet, dass** in dem Kugelkopf (9) ein, insbesondere von der Ausnehmung (10) gebildetes, Sackloch (11) vorgesehen ist, wobei der Grund (12) des Sacklochs (11) insbesondere von dem Grundkörper (2) definiert ist.

4. Schaltwelle nach einem der vorhergehenden Ansprüche, **dadurch gekennzeichnet, dass** das Betätigungselement (8) zumindest ein in den Schaltwellenkörper (6) eingreifendes Hintergriffselement (13), insbesondere in Form eines Radialkragens, aufweist.

5. Schaltwelle nach einem der vorhergehenden Ansprüche, **dadurch gekennzeichnet, dass** das Betätigungselement (8) mindestens ein Dichtelement (14), insbesondere als Radialvorsprung ausgebildet und/oder in radialer Richtung mit dem Schaltwellenkörper (6) fluchtend, aufweist.

6. Schaltwelle nach einem der vorhergehenden Ansprüche, **dadurch gekennzeichnet, dass** von dem Grundkörper (2) und/oder dem Schaltwellenkörper (6) zumindest ein Abdeckelement (7) ausgebildet ist.

7. Verfahren zur Herstellung einer Schaltwelle (1), insbesondere nach einem oder mehreren der vorhergehenden Ansprüche, mit einem zur Betätigung der Schaltwelle (1) vorgesehenen, einen Kugelkopf (9) aufweisenden Betätigungselement (8), **dadurch gekennzeichnet, dass** die Schaltwelle (1) aus einem aus einem ersten Werkstoff bestehenden Grundkörper (2) und einem zumindest bereichsweise auf den Grundkörper (2) aufgebrachten Schaltwellenkörper (6) aus einem zweiten Werkstoff hergestellt wird, und dass das Betätigungselement (8) zumindest bereichsweise von dem Schaltwellenkörper (6) eingefasst wird, wobei zumindest ein Bereich des Betätigungselements (8) den Grundkörper (2) der Schaltwelle (1) wenigstens bereichsweise umfänglich umgreift, wozu das Betätigungselement (8) eine den Kugelkopf (9) zumindest bereichsweise durchgreifende Ausnehmung (10) zur zumindest bereichsweisen Aufnahme des Grundkörpers (2) aufweist.

8. Verfahren nach Anspruch 7, **dadurch gekennzeichnet, dass** das Aufbringen des Schaltwellenkörpers (6) auf den Grundkörper (2) und das Einfassen des Betätigungselements (8) im Wesentlichen gleichzeitig, insbesondere während eines Spritzgießverfahrens, erfolgen.

## Claims

1. Selector shaft (1), in particular of a suction tube arrangement, comprising an actuating element (8) which is provided for actuating the selector shaft (1) and has a ball-shaped head (9), **characterised in that** the selector shaft (1) consists of a main body (2) made of a first material, and a selector shaft body (6) which is made of a second material and is applied to the main body (2) at least in regions, and **in that** the selector shaft body (6) encloses the actuating element (8) at least in regions, at least one region of the actuating element (8) circumferentially surrounding the main body (2) of the selector shaft (1) at least in regions, for which purpose the actuating element (8) comprises a recess (10) which extends through the ball-shaped head (9) at least in regions for receiving the main body (2) at least in regions.

2. Selector shaft according to claim 1, **characterised in that** the first material is a metal, in particular steel, and/or the second material is a plastics material, in particular a polymer.

3. Selector shaft according to either of the preceding claims, **characterised in that** a blind hole (11), in particular formed by the recess (10), is provided in the ball-shaped head (9), the base (12) of the blind hole (11) being defined in particular by the main body (2).

4. Selector shaft according to any of the preceding claims, **characterised in that** the actuating element (8) comprises at least one tongue-and-groove element (13), in particular in the form of a radial collar, which engages in the selector shaft body (6).

5. Selector shaft according to any of the preceding claims, **characterised in that** the actuating element (8) comprises at least one sealing element (14), in particular constructed as a radial projection and/or aligned with the selector shaft body (6) in the radial direction.

6. Selector shaft according to any of the preceding claims, **characterised in that** at least one cover element (7) is formed by the main body (2) and/or the selector shaft body (6).

7. Method for producing a selector shaft (1), in particular according to one or more of the preceding claims, comprising an actuating element (8) which is provided for actuating the selector shaft (1) and has a ball-shaped head (9), **characterised in that** the selector shaft (1) is produced from a main body (2) made of a first material, and a selector shaft body (6) which is made of a second material and is applied to the main body (2) at least in regions, and **in that** the selector shaft body (6) encloses the actuating element (8) at least in regions, at least one region of the actuating element (8) circumferentially surrounding the main body (2) of the selector shaft (1) at least in regions, for which purpose the actuating element (8) comprises a recess (10) which extends through the ball-shaped head (9) at least in regions for receiving the main body (2) at least in regions.

8. Method according to claim 7, **characterised in that** the steps of applying the selector shaft body (6) to the main body (2) and enclosing the actuating element (8) are performed substantially simultaneously, in particular during an injection moulding process.

## Revendications

1. Arbre de commande (1), en particulier d'un dispositif de tube d'aspiration, avec un élément d'actionnement (8) prévu pour l'actionnement de l'arbre de commande (1) et présentant une tête sphérique (9), **caractérisé en ce que** l'arbre de commande (1) se compose d'un corps principal (2) composé d'un premier matériau et d'un corps d'arbre de commande (6) appliqué au moins par zones sur le corps principal (2) et composé d'un deuxième matériau, et **en ce que** l'élément d'actionnement (8) est, au moins par zones, enchâssé par le corps d'arbre de commande (6), au moins une zone de l'élément d'actionnement (8) enveloppant le corps principal (2) de l'arbre de commande (1) au moins par zones au niveau de la circonférence, l'élément d'actionnement (8) présentant à cette fin un creux (10) traversant la tête sphérique (9) au moins par zones pour recevoir au moins par zones le corps principal (2).

2. Arbre de commande selon la revendication 1, **caractérisé en ce que** le premier matériau est un métal, en particulier de l'acier, et/ou **en ce que** le deuxième matériau est une matière plastique, en particulier un polymère.

3. Arbre de commande selon une des revendications précédentes, **caractérisé en ce que**, dans la tête sphérique (9), il est prévu un trou borgne (11), formé en particulier du creux (10), le fond (12) du trou borgne (11) étant en particulier défini par le corps principal (2).

4. Arbre de commande selon une des revendications précédentes, **caractérisé en ce que** l'élément d'actionnement (8) présente au moins un élément de prise arrière (13) qui engrène dans le corps d'arbre de commande (6), en particulier sous forme de collerette radiale.

5. Arbre de commande selon une des revendications précédentes, **caractérisé en ce que** l'élément d'actionnement (8) présente au moins un élément d'étanchéité (14), en particulier constitué en tant que saillie radiale et/ou en affleurement avec le corps d'arbre de commande (6) dans la direction radiale.

6. Arbre de commande selon une des revendications précédentes, **caractérisé en ce qu'**au moins un élément de recouvrement (7) est constitué du corps principal (2) et/ou du corps d'arbre de commande (6).

7. Procédé de fabrication d'un arbre de commande (1), en particulier selon une ou plusieurs des revendications précédentes, avec un élément d'actionnement (8) prévu pour l'actionnement de l'arbre de commande (1) et présentant une tête sphérique (9), **caractérisé en ce que** l'arbre de commande (1) est fabriqué à partir d'un corps principal (2) composé d'un premier matériau et d'un corps d'arbre de commande (6) appliqué au moins par zones sur le corps principal (2) à partir d'un deuxième matériau, et **en ce que** l'élément d'actionnement (8) est, au moins par zones, enchâssé par le corps d'arbre de commande (6), au moins une zone de l'élément d'actionnement (8) enveloppant le corps principal (2) de l'arbre de commande (1) au moins par zones au niveau de la circonférence, l'élément d'actionnement (8) présentant à cette fin un creux (10) traversant la tête sphérique (9) au moins par zones pour recevoir au moins par zones le corps principal (2).

8. Procédé selon la revendication 7, **caractérisé en ce que** l'application du corps d'arbre de commande (6) sur le corps principal (2) et l'enchâssement de l'élément d'actionnement (8) s'effectuent essentiellement simultanément, en particulier pendant un processus de moulage par injection.
